# EUROPÄISCHE PATENTSCHRIFT

(11) **EP 1 446 436 B1**
(45) Veröffentlichungstag und Bekanntmachung des Hinweises auf die Patenterteilung: **19.01.2011**
(21) Anmeldenummer: 02802996.5
(22) Anmeldetag: 08.11.2002
(51) Int. Cl.: C08G 18/10, C08G 18/48, C08G 18/32

(54) **VERFAHREN ZUR HERSTELLUNG VON POLYURETHANEN**
METHOD FOR PRODUCING POLYURETHANES
PROCEDES DE PRODUCTION DE POLYURETHANES

(30) Priorität: 14.11.2001 DE 10155772
(43) Veröffentlichungstag der Anmeldung: 18.08.2004
(73) Patentinhaber: BASF SE, 67056 Ludwigshafen (DE)
(72) Erfinder: SCHÜTTE, Markus, 49074 Osnabrück (DE); KREYENSCHMIDT, Martin, 49393 Lohne (DE)
(86) Internationale Anmeldenummer: PCT/EP2002/012490
(87) Internationale Veröffentlichungsnummer: WO 2003/042269

(56) Entgegenhaltungen:
- EP-A- 0 293 589
- WO-A-00/50483
- US-A- 5 338 820
- US-A- 5 696 221

## Beschreibung

Die Erfindung betrifft Verfahren zur Herstellung von Polyurethanen durch Umsetzung einer Isocyanatkomponente (B) mit einer Polyolkomponente (A), **dadurch gekennzeichnet, dass** es sich bei der Isocyanatkomponente (B) um ein Polyisocyanatprepolymer mit einem NCO-Gehalt von 10 bis 21% handelt, und dass der Umsetzung als Kettenverlängerungsmittel Ethylenglykol (C1) und Diethylenglykol (C2) zugegeben werden, sowie die Verwendung der Polyurethane zur Herstellung von Formkörpern, insbesondere von Schuhsohlen.

Polyurethane sind allgemein als vielseitige Kunststoffe bekannt. Je nach Anwendungsgebiet werden sie als Hart-, Halbhart-, Weich- oder Integralschäume oder als Elastomere eingesetzt. Thermoplastische Polyurethane sind teilkristalline Werkstoffe und gehören zu der Klasse der thermoplastischen Elastomere. Sie zeichnen sich unter anderem durch gute Festigkeiten, Abriebe und Chemikalienbeständigkeit aus, und werden beispielsweise für die Herstellung von Formteilen oder Fasern verwendet.

Elastische Polyurethanformkörper mit kompakter Oberfläche und zelligem Kern, sogenannte Polyurethan-Weichintegralschaumstoffe, sind seit langem bekannt und haben verschiedene Anwendungen. Typische Einsatzgebiete sind elastische Teile im Automobilbereich, wie Armlehnen, Lenkradumschäumungen und Spoiler, oder Schuhsohlen.

Mikrozelluläre Schäume aus Polyurethan (hierin als PUR abgekürzt) werden in zunehmendem Maße zur Produktion von Schuhsohlen verwendet. Dies liegt u.a. am hohen Tragekomfort der Schuhsohlen, der auf die guten mechanischen Eigenschaften wie z.B. hohe Elastizität, Flexibilität, Kälteisolation oder Ölbeständigkeit bei gleichzeitig geringem Gewicht zurückzuführen ist. Für eine Anwendung von PUR-Schäumen in Schuhsohlen sind die Dauergebrauchs-Eigenschaften bei dynamischer Beanspruchung von besonderer Bedeutung. Dies erfordert hohe Anforderungen an die dynamisch-mechanischen Eigenschaften.

Die Überprüfung der dynamisch-mechanischen Eigenschaften erfolgt durch Biegetests an Prüfkörpern (DIN 53543). Für Proben mit geringem Widerstand gegen Rissbildung und Risswachstum bei dynamischer Dauerbiegebeanspruchung besteht in der Praxis ein hohes Risiko für das Auftreten von Sohlenbrüchen bei bereits gefertigten Schuhen. Dies verursacht hohe Reklamationskosten und Imageschaden für den Systemanbieter.

Ein wichtiger Parameter stellt das Mischungsverhältnis zwischen Isocyanat- (B-Komponente) und Isocyanat-reaktiver Komponente (nachstehend als Polyolkomponente oder A-Komponente bezeichnet) dar, da dieses Verhältnis die gesamten, insbesondere die dynamisch-mechanischen Eigenschaften, maßgeblich beeinflusst. Das Optimum der mechanischen Eigenschaften wird bei Mischungsverhältnissen erzielt, die im Bereich einer stöchiometrischen Umsetzung der reaktiven Gruppen liegen, d.h. im allgemeinen einen NCO-Index von 90-110.

Die Bestimmung des genauen optimalen Mischungsverhältnisses bzw. NCO-Index muss experimentell erfolgen. Bereits kleine Abweichungen vom optimalen Mischungsverhältnis resultieren in einem drastischen Abfall der mechanischen Eigenschaften der Schäume. Der Bereich an Mischungsverhältnissen bzw. Indexpunkten, über den zufriedenstellende Dauerbiege-Ergebnisse (Risserweiterung < 2 mm bei 100000 Biegungen bei Raumtemperatur) erzielt werden (= Verarbeitungsfenster), wird durch die Zusammensetzung der zu verschäumenden Komponenten beeinflusst und beschränkt sich üblicherweise auf wenige NCO-Indexpunkte (Optimum ± 1).

Eine Erhöhung der Prozesssicherheit während der Produktion von Schuhsohlen könnte durch Verbreiterung des Verarbeitungsfenster der Systeme erreicht werden. Ein breites Verarbeitungsfenster weisen solche Systeme auf, mit denen über einen weiten Bereich an Mischungsverhältnissen bzw. Indexpunkten optimale Dauerbiege-Ergebnisse erzielt werden können und wobei es somit nicht zum Bruch der Schuhsohlen kommt.

Weiterhin sind PUR-Schäume, beispielsweise in Schuhsohlen, während des Gebrauchs schwankenden Feuchtigkeitsgehalten und Temperaturen ausgesetzt. Insbesondere unter feucht-warmen Klima wird häufig eine deutliche Verschlechterung der mechanischen Eigenschaften beobachtet.

Bei PUR-Systemen auf der Basis von Polyether-Alkoholen tritt unter feucht-warmen Bedingungen eine Verschlechterung insbesondere der dynamisch-mechanischen Eigenschaften auf. Hydrolytisch gealterte Proben weisen deutlich schlechtere Dauerbiege-Ergebnisse als ungealterte Proben auf.

Für die Praxis geeignete Systeme müssen möglichst weite, überlappende NCO-Indexbereiche aufweisen, die zufriedenstellende Dauerbiege-Ergebnisse vor und nach hydrolytischer Alterung liefern.

Um die Prozesssicherheit bei der Produktion von Polyurethanen, insbesondere von Schuhsohlen aus PUR-Schäumen zu erhöhen, war es notwendig, Systeme mit einem weiten Verarbeitungsfenster zu entwickeln, die hohe Sicherheit gegenüber Materialfehlern, beispielsweise Sohlenbrüchen, auch unter feucht-warmen Bedingungen gewährleisten.

Im Stand der Technik (E.R. McAfee, Rubber World 1999, 221, 32-35; E. Müller, Angew. Makromol. Chem. 1970, 14, 75-86) finden sich einige Vorschläge zur Verbesserung der Hydrolysestabilität von kompaktem oder auch zelligen PUR auf der Basis von Polyester-Alkoholen bekannt. Die hierin beschriebenen Lösungsansätze zielen in den meisten Fällen auf die Reduzierung der durch Esterhydrolyse verursachten Schäden wie z.B. Zusatz von Säurefängem oder die Verwendung modifizierter, hydrophober Polyester-Alkohole.

Die Verwendung von Polyester-PUR in Schuhsohlen hat den Nachteil der generell höheren Hydrolyseanfälligkeit und dem höheren Preis der Ausgangskomponenten und der benötigten zusätzlichen Hydrolyseschutzmittel. Systematische Untersuchungen zur Verbesserung der Hydrolyseanfälligkeit von Polyether-PUR insbesondere in bezug auf die Auswirkungen auf die dynamisch-mechanischen Eigenschaften sind bislang nicht veröffentlicht worden.

US 5 338 820 offenbart flexible PU-Integralschaumzusammensetzunge, die zur Herstellung von Schuhsohlen, Lenkrädern und Dichtungen verwendet werden, wobei eine Mischung von Ethylenglycol (EG) und Diethylenglycol (DEG) in einem Gewichtsverhältnis von EG zu DEG von 1 zu 0.45 als Kettenverlängerungsmittel in der Polyolkomponente (A) eingesetzt wird.

Die Polyolmischung, die genanntes EG und DEG beinhaltet, reagiert mit einem Quasi-Präpolymer, das einen NCO-Gehalt von 10 - 32 Gew.-% aufweisen kann, zum PU-Integralschaum.

WO 99/07761 beschreibt die Verbesserung der Dauerbiege-Eigenschaften von wassergetriebenen Schäumen durch Einsatz hoch Ethylenoxid-haltiger Polyether-Polyole. Es finden sich keine Angaben zur Verarbeitungsbreite bzw. zur Hydrolysestabilität der mikrozellulären Polyether-PUR-Schäume.

Es sind ein Reihe von Kettenverlängerungsmittel in mikrozellulären Schäumen, beispielsweise für Schuhsohlen, sowohl in der A- als auch in der B-Komponente beschrieben werden. Dabei handelt es sich im allgemeinen in der A-Komponente um verzweigte oder unverzweigte primäre Diole wie beispielsweise Ethylenglykol, 1,4-Butandiol, 1,3-Propandiol oder Gemische davon. Den häufigst verwendeten Kettenverlängerer stellt 1,4-Butandiol dar. Eine ausschließliche Verwendung von Ethylenglykol (C1) als Kettenverlängerungsmittel ist kaum verbreitet, da in diesem Fall lange Entformzeiten und Probleme bei der Verarbeitung (z.B. Hautdefekte) auftauchen.

In der B-Komponente wurden bislang nur längerkettige Kettenverlängerungsmittel wie z.B. Dipropylenglykol zur Verflüssigung der Isocyanatkomponente eingesetzt. WO 00/50483 beschreibt die Verbesserung von Pigment induzierten Verarbeitungsproblemen durch Verwendung von Kombinationen aus Kettenverlängerungsmittel in der A-Komponente, wobei mindestens einer der Kettenverlängerer 1,3-Propandiol oder ein verzweigtes C3-C5-Diol darstellt. Es werden keine Angaben zu Entformzeiten oder Ergebnisse von Dauerbiege-Experimenten gemacht.

Aufgabe der vorliegenden Erfindung war es daher, Polyurethane bereit zu stellen, die neben guter Verarbeitbarkeit sowohl vor als auch nach hydrolytischer Alterung gute mechanische Eigenschaften, wie beispielsweise gutes Dauerbiegeverhalten, aufweisen und sowohl vor als auch nach hydrolytischer Alterung ein breites Verarbeitungsfenster aufweisen.

Es wurde gefunden, dass durch den Einsatz von Ethylenglykol (C1) und Diethylenglykol (C2) als Kettenverlängerungsmittel bei der Herstellung von Polyurethanen ein unerwartet weites Verarbeitungsfenster bei gleichzeitig guter Verarbeitbarkeit der Polyurethane ermöglicht wird.

Gegenstand der Erfindung ist daher ein Verfahren zur Herstellung von Polyurethanen durch Umsetzung einer Isocyanatkomponente (B) mit einer Polyolkomponente (A), **dadurch gekennzeichnet, dass** es sich bei der Isocyanatkomponente (B) um ein Polyisocyanatprepolymer mit einem NCO-Gehalt von 10 bis 21 % handelt, und dass der Umsetzung als Kettenverlängerungsmittel Ethylenglykol (C1) und Diethylenglykol (C2) zugegeben werden, wobei das Gewichtsverhältnis von Ethylenglykol (C1) zu Diethylenglykol (C2) 1 : 0,01 bis 1 : 10 beträgt.

Ferner sind Gegenstand der Erfindung Polyurethane, erhältlich durch vorstehend genanntes, erfindungsgemäße Verfahren.

Ebenfalls ist Gegenstand dieser Erfindung die Verwendung der erfindungsgemäßen Polyurethane zur Herstellung von Schuhsohlen und die Verwendung eines Gemisches von Ethylenglykol (C1) und Diethylenglykol (C2), wobei das Gewichtsverhältnis von Ethylenglykol (C1) zu Diethylenglykol (C2) 1 : 0,01 bis 1 : 10 beträgt, als Kettenverlängerungsmittel bei der Herstellung von Polyurethanen durch Umsetzung eines Polyisocyanatprepolymers mit einem NCO-Gehalt von 10 bis 21 % mit einer Polyolkomponente (A).

Die als Kettenverlängerungsmittel verwendeten Stoffe Ethylenglykol (C1) und Diethylenglykol (C2) werden im Rahmen dieser Erfindung im einem Gewichtsverhältnis von Ethylenglykol (C1) zu Diethylenglykol (C2) von 1 : 0,01 bis 1 : 10, bevorzugt von 1 : 0,05 bis 1 : 5, besonders bevorzugt von 1 : 0,1 bis 1 : 3 eingesetzt.

Bezogen auf das Gewicht des resultierenden Polyurethans beträgt die Menge des eingesetzten Ethylenglykols (C1) 0,1 bis 10 Gew.-%, bevorzugt 1 bis 8 Gew.-%, besonders bevorzugt von 2 bis 5 Gew.-%.

Bezogen auf das Gewicht des resultierenden Polyurethans beträgt die Menge des eingesetzten Diethylenglykols (C2) 0,01 bis 10 Gew.-%, bevorzugt 0,1 bis 8 Gew.-%, besonders bevorzugt von 1 bis 5 Gew.-%.

Bei dem erfindungsgemäßen Verfahren wird zur Herstellung des Polyurethans eine Isocyanatkomponente (B-Komponente) mit einer Polyolkomponente (A-Komponente) zur Reaktion gebracht. Die Kettenverlängerungsmittel Ethylenglykol (C1) und Diethylenglykol (C2) können im allgemeinen der Isocyanatkomponente, der Polyolkomponente oder beiden Komponenten einzeln oder im Gemisch zugesetzt werden.

In einer besonders bevorzugten Ausführungsform werden die Kettenverlängerungsmitteln Ethylenglykol (C1) und Diethylenglykol (C2) der Polyolkomponente (A) zugegeben. Bevorzugt erfolgt diese Zugabe im Gemisch der Kettenverlängerungsmittel.

Es ist bevorzugt, dass die Polyolkomponenten (A) neben den Kettenverlängerungsmitteln Ethylenglykol (C1) und Diethylenglykol (C2) keine weiteren Kettenverlängerungsmittel enthält, insbesondere ist es bevorzugt, dass Polyolkomponenten (A) kein 1,4-Butandiol enthält.

In einer weiteren Ausführungsform wird mindestens ein Teil des Diethylenglykols (C2) der Isocyanatkomponente (B) zugegeben und das Ethylenglykols (C1) und gegebenenfalls ein Rest an Diethylenglykol (C2) der A-Komponente zugegeben.

Das erfindungsgemäße Verfahren eignet sich zur Herstellung von kompakten und zelligen Polyurethanen. Beispiele für kompakte Polyurethane sind thermoplastische Polyurethane oder Gießelastomere. Beispiele für zellige Polyurethane sind Hart- und Weichund Integralschäume.

Bevorzugt wird das erfindungsgemäße Verfahren zur Herstellung Polyurethanformkörper mit zelligem Kern und kompakter Oberfläche verwendet. Hierzu wird die Reaktion von Polyol- und Isocyanatkomponente in einer geeigneten Form, bevorzugt unter Verdichtung, durchgeführt. Die bevorzugten Schäume weisen im allgemeinen eine Formdichte von 100 bis 1000 g/l, bevorzugt von 150 bis 650 g/l auf.

Die im erfindungsgemäßen Verfahren eingesetzte Polyolkomponente (A-Komponente), zu der Ethylenglykol (C1) und gegebenenfalls Diethylenglykol (C2) gegeben wird, ist im allgemeinen aufgebaut aus
(A1) Verbindungen mit mindestens zwei gegenüber Isocyanaten reaktiven Wasserstoffatomen und einem Molekulargewicht von 400 bis 10000, bevorzugt von 500 bis 8000, besonders bevorzugt 600 bis 7000 sowie gegebenenfalls
(A2) Katalysatoren
(A3) Treibmittel und
(A4) Zusatzstoffen.

Gegebenenfalls ist es möglich, die optionalen Bestandteile (A2), (A3) und (A4) ganz oder teilweise der Isocyanatkomponente (B) zuzusetzen. Nicht möglich ist dies, sofern die Bestandteile (A2) bis (A3) mit Isocyanatgruppen zu unerwünschten Reaktionen führen, beispielsweise bei der Zugabe von Wasser als Treibmittel.

Als gegenüber Isocyanaten reaktive Verbindungen (A1) kommen Verbindungen in Frage, die zwei oder mehr reaktive Gruppen, ausgewählt aus OH-Gruppen, SH-Gruppen, NH-Gruppen, NH₂-Gruppen und CH-aciden Gruppen, wie z.B. β-Diketo-Gruppen, im Molekül tragen.

Zweckmäßigerweise werden solche mit einer Funktionalität von 1,8 bis 8, vorzugsweise 2 bis 6, besonders bevorzugt 2 bis 4 verwendet. Bewährt haben sich z.B. Polyether-polyamine und/oder vorzugsweise Polyole, ausgewählt aus der Gruppe der Polyetherpolyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole. Besonders bevorzugt werden Polyetherpolyole eingesetzt. Die Hydroxylzahl der Polyhydroxylverbindungen beträgt dabei üblicherweise 10 bis 1000, bevorzugt 10 bis 200.

Besonders bevorzugt werden als Komponente (A1) Polyetherpolyole verwendet. Sie werden nach bekannten Verfahren, beispielsweise durch anionische Polymerisation mit Alkalihydroxiden oder Alkalialkoholaten als Katalysatoren und unter Zusatz mindestens eines Startermoleküls, das 2 bis 3 reaktive Wasserstoffatome gebunden enthält, oder durch kationische Polymerisation mit Lewis-Säuren, wie Antimonpentachlorid oder Borfluorid-Etherat aus einem oder mehreren Alkylenoxiden mit 2 bis 4 Kohlenstoffatomen im Alkylenrest hergestellt. Geeignete Alkylenoxide sind beispielsweise Tetrahydrofuran, 1,3-Propylenoxid, 1,2- bzw. 2,3-Butylenoxid und vorzugsweise Ethylenoxid und 1,2-Propylenoxid. Die Alkylenoxide können einzeln, alternierend nacheinander oder als Mischungen verwendet werden. Bevorzugt werden Mischungen aus 1,2-Propylenoxid und Ethylenoxid, wobei das Ethylenoxid in Mengen von 10 bis 50 % als Ethylenoxid-Endblock eingesetzt wird ("EO-cap"), so dass die entstehenden Polyole zu über 70 % primäre OH-Endgruppen aufweisen.

Als Startermolekül kommen Wasser oder 2- und 3-wertige Alkohole in Betracht, wie Ethylenglykol, Propandiol-1,2 und -1,3, Diethylenglykol, Dipropylenglykol, Butandiol-1,4, Glycerin, Trimethylolpropan usw.

Die Polyetherpolyole, vorzugsweise Polyoxypropylen-polyoxyethylen-polyole, besitzen also eine Funktionalität von 2 bis 4 und Molekulargewichte von 1.000 bis 10.000, vorzugsweise 1500 bis 7000.

Als Polyetherole eignen sich ferner polymermodifizierte Polyetherpolyole, vorzugsweise Pfropfpolyetherpolyole, insbesondere solche auf Styrol- und/oder AcrylnitrilbaSis.

Weiterhin können als Polyetherole sogenannte niedrig ungesättigte Polyetherole verwendet werden. Unter niedrig ungesättigten Polyolen werden im Rahmen dieser Erfindung insbesondere Polyetheralkohole mit einem Gehalt an ungesättigten Verbindungen von kleiner als 0,02 meg/g, bevorzugt kleiner als 0,01 meg/g, verstanden. Ihre Hydroxylzahl liegt vorzugsweise im Bereich zwischen 20 und 60 mg KOH/g, sie sind zumeist 2 bis 3-funktionell..

Derartige Polyetheralkohole werden zumeist durch Anlagerung von Alkylenoxiden, insbesondere Ethylenoxid, Propylenoxid und Mischungen daraus, an H-funktionelle Startsubstanzen in Gegenwart von hochaktiven Katalysatoren hergestellt. Derartige hochaktive Katalysatoren sind beispielsweise Cäsiumhydroxid und Multimetallcyanidkatalysatoren, auch als DMC-Katalysatoren bezeichnet. Die DMC-Katalysatoren werden zumeist durch Umsetzung eines Metallsalzes mit einer Cyanometallatverbindung hergestellt. Diese Umsetzung kann in Anwesenheit von organischen Liganden durchgeführt werden. Ein häufig eingesetzter DMC-Katalysator ist das Zinkhexacyanocobaltat. Der DMC-Katalysator kann nach der Umsetzung im Polyetheralkohol belassen werden, üblicherweise wird er entfernt, beispielsweise durch Sedimentation oder Filtration.

Neben den bevorzugten Polyetherpolyolen sind weiterhin Polyesterpolyole als Komponente (A1) geeignet. Diese können beispielsweise aus organischen Dicarbonsäuren mit 2 bis 12 Kohlenstoffatomen, vorzugsweise aliphatischen Dicarbonsäuren mit 4 bis 6 Kohlenstoffatomen, mehrwertigen Alkoholen, vorzugsweise Diolen, mit 2 bis 12 Kohlenstoffatomen, vorzugsweise 2 bis 6 Kohlenstoffatomen hergestellt werden. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden.

Zur Herstellung der Polyesterpolyole können die organischen, z.B. aromatischen und vorzugsweise aliphatischen Polycarbonsäuren und/ oder -derivate und mehrwertigen Alkohole katalysatorfrei oder vorzugsweise in Gegenwart von Veresterungskatalysatoren bei Temperaturen von 150 bis 280°C gegebenenfalls unter vermindertem Druck, bis zu der gewünschten Säurezahl, die vorteilhafterweise kleiner als 10, vorzugsweise kleiner als 2 ist, polykondensiert werden.

Die erhaltenen Polyesterpolyole besitzen vorzugsweise eine Funktionalität von 2 bis 4, insbesondere 2 bis 3, und ein Molekulargewicht von 480 bis 3000, vorzugsweise 1000 bis 3000.

Als Katalysatoren (A2) zur Herstellung der Polyurethane werden insbesondere Verbindungen verwendet, die die Reaktion der Hydroxylgruppen enthaltenden Verbindungen der Komponenten (A1) mit den Polyisocyanaten a) stark beschleunigen.

In Betracht kommen beispielsweise Zinn(II)verbindungen wie Zinndiacetat oder Zinndioctoat oder Dialkylzinn-IV-salze wie Dibutylzinndilaurat usw. Die Metallverbindungen werden gewöhnlich in Kombination mit stark basischen Aminen eingesetzt. Genannt seien beispielsweise Triethylamin, Pentamethyldiethylentriamin, Tetramethyl-diaminoethylether, 1,2-Dimethylimidazol oder vorzugsweise Triethylendiamin (Dabco).

Als Treibmittel (A3) können zur Herstellung von geschäumten Produkten allgemein bekannte chemisch oder physikalisch wirkende Verbindungen eingesetzt werden. Als chemisch wirkendes Treibmittel kann bevorzugt Wasser eingesetzt werden. Beispiele für physikalische Treibmittel sind inerte (cyclo)aliphatische Kohlenwasserstoffe mit 4 bis 10 Kohlenstoffatomen, die unter den Bedingungen der Polyurethanbildung verdampfen. Weiterhin sind Fluoroder Fluor/Chlor-Kohlenwasserstoffe möglich. Ebenfalls ist eine Kombination dieser Treibmittel möglich, beispielsweise eine Kombination aus Wasser und physikalisch wirkendem Treibmittel. Die Menge der eingesetzten Treibmittel richtet sich nach der angestrebten Dichte der Schaumstoffe. Besonders bevorzugt wird nur Wasser als Treibmittel eingesetzt.

Der Reaktionsmischung zur Herstellung der Formkörper können gegebenenfalls auch noch Zusatzstoffe (A4) einverleibt werden. Genannt seien beispielsweise oberflächenaktive Substanzen, Schaumstabilisatoren, Zellregler, äußere und innere Trennmittel, Füllstoffe, Farbstoffe, Pigmente, Flammschutzmittel, Hydrolysenschutzmittel, Stabilisatoren wie UV-Stabilisatoren oder Thermostabilisatoren, fungistatisch und bakteriostatisch wirkende Substanzen oder Gemische daraus.

Die Isocyanatkomponente (B-Komponente) basiert im allgemeinen auf Polyisocyanaten (B1).

Dabei handelt es sich bei der Isocyanatkomponente (B) um ein Polyisocyanatprepolymer mit einem NCO-Gehalt von 10 bis 21 %, die erhalten werden durch Umsetzung von
(B1) Polyisocyanaten mit
(B2) Verbindungen mit mindestens zwei gegenüber Isocyanaten reaktiven Wasserstoffatomen und einem Molekulargewicht von 400 bis 10000 und gegebenenfalls
(B3) Kettenverlängerungsmittel.

Sofern es gewünscht ist, das Kettenverlängerungsmittel Diethylenglykol (C2) der B-Komponente zuzusetzen, so wird dieses der Umsetzung von (B1) mit (B2) und gegebenenfalls (B3) zugegeben.

Die zur Herstellung der Isocyanat-Prepolymere verwendeten Polyisocyanate (B1) umfassen die aus dem Stand der Technik bekannten aliphatischen, cycloaliphatischen und aromatischen Isocyanate sowie beliebige Mischungen daraus. Beispiele sind 4,4'-Diphenylmethandiisocyarlat, die Mischungen aus monomeren Diphenylmethandiisocyanaten und höherkemigen Homologen des Diphenylmethandiisocyanats (Polymer-MDI), Tetramethylendiisocyanat, Tetramethylendiisocyanat-Trimere, Hexamethylendiisocyanat (HDI), Hexamethylendiisocyanat-Trimere, Isophorondiisocyanat-Trimer, 4,4'-Methylenbis(cyclohexyl)-diisocyanat, Xylylendiisocyanat, Tetramethylxylylendiisocyanat, sowie Polyisocyanate mit NCO-Gruppen unterschiedlicher Reaktivität, wie 2,4-Toluylendiisocyanat (2,4-TDI), 2,6-Toluylendlisocyanat (2,6-TDI), 2,4'-Diphenylmethandiisocyanat (2,4'-MDI), Isophorondiisocyanat (IPDI), und 2,4'-Methylenbis(cyclohexyl)diisocyanat.

Als Polyisocyanate werden bevorzugt verwendet 4,4'-Diphenylmethandiisocyanat, 1,3- und 1,4-Phenylendiisocyanat, Toluylendiisocyanat, Isophorondiisocyanat (IPDI) und Naphtylendiisocyanat (NDI). Besonders bevorzugt wird 4,4'-MDI und/oder HDI verwendet.

Das besonders bevorzugt verwendete 4,4'-MDI kann geringe Mengen, bis etwa 10 Gew.-%, allophanat- oder uretoniminmodifizierte Polyisocyanate enthalten. Es können auch geringe Mengen Polyphenylenpolymethylenpolyisocyanat (Roh-MDI) eingesetzt werden. Die Gesamtmenge dieser hochfunktionellen Polyisocyanate sollte 5 Gew.-% des eingesetzten Isocyanates nicht überschreiten.

Für bestimmte Einsatzfälle kann es sinnvoll sein, Gemische aus 4,4'-MDI und anderen aromatischen Diisocyanaten, beispielsweise 2,4- oder 2,4'-Diisocyanatodiphenylmethan zu verwenden. Der Anteil dieser Diisocyanate sollte jedoch 30 Gew.-% nicht übersteigen.

Die zur Herstellung der Polyisocyanatprepolymere verwendeten (B2) Verbindungen mit mindestens zwei gegenüber Isocyanaten reaktiven Wasserstoffatomen und einem Molekulargewicht von 400 bis 10000 sind enthalten im allgemeinen die vorstehend beschriebene Komponente (A1).

Besonders bevorzugt werden zur Herstellung der Polyisocyanatprepolymere 2- bis 3-funktionelle Polyoxypropylen- und Polyoxypropylen-Polyoxyethylenpolyole eingesetzt. Ihre Herstellung erfolgt zumeist durch die allgemein bekannte basisch katalysierte Anlagerung von Propylenoxid allein oder im Gemisch mit Ethylenoxid an. H-funktionelle, insbesondere OH-funktionelle Startsubstanzen. Als Startsubstanzen dienen beispielsweise Wasser, Ethylenglykol (C1) oder Propylenglykol beziehungsweise Glycerin oder Trimethylolpropan.

Bei Verwendung von Ethylenoxid/Propylenoxidmischungen wird das Ethylenoxid bevorzugt in einer Menge von 10-50 Gew.-%, bezogen auf die Gesamtmenge an Alkylenoxid, eingesetzt. Der Einbau der Alkylenoxide kann hierbei blockweise oder als statistisches Gemisch erfolgen. Besonders bevorzugt ist der Einbau eines Ethylenoxid-Endblocks ("EO-cap"), um den Gehalt an reaktiveren primären OH-Endgruppen zu erhöhen.

Bevorzugt eingesetzt werden Diole, basierend auf Polyoxypropylen mit ca. 20 Gew.-% Polyoxyethyleneinheiten am Kettenende, so dass mehr als 80 % der OH-Gruppen primäre OH-Gruppen sind. Das Molekulargewicht dieser Diole liegt vorzugsweise zwischen 2000 und 4500.

Ebenfalls können als Komponente (B2) auch die unter (A1) beschriebenen niedrig ungesättigten Polyole verwendet werden.

Zur Herstellung des Polyisocyanatprepolymers können zusätzliche Kettenverlängerungsmittel (B3) verwendet werden, wobei der Einsatz der Komponente (B3) optional ist. Die Komponente (B3) umfasst niedermolekulare gegenüber Isocyanaten reaktive Verbindungen, bevorzugt mehrwertige Alkohole, vorzugsweise Diole und/oder Triole, mit Molekulargewichten kleiner als 399 g/mol, bevorzugt von 60 bis 300 g/mol, wobei die Komponente (B3) nicht Ethylenglykol (C1) und Diethylenglykol (C2) umfasst.

In Betracht kommen beispielsweise aliphatische, cycloaliphatische und/oder araliphatische Diole, wie z.B. Alkandiole mit 2 bis 14, vorzugsweise 2 bis 6 Kohlenstottatornen und/oder Dialkylenglykole mit 4 bis 8, vorzugsweise 4 bis 6 Kohlenstoffatomen, wie z.B. Propandiol-Triethylenglykol, Dipropylenglykol, Tripropylenglykol, Butandiol-1,3, Butandiol-1,4, Hexandiol-1,6, Trimethylolethan, Glycerin, Trimethylolpropan und Mischungen daraus.

Die Herstellung der als Komponente (B) verwendeten Polyisocyanatprepolymeren erfolgt auf an sich bekannte Welse, indem das Polyisocyanat (B1), beispielsweise bei Temperaturen von etwa 80°C, mit den Polyolen (B2) und gegebenenfalls der Komponente (B3) zum Prepolymer umgesetzt werden. Um Nebenreaktionen durch Luftsauerstoff auszuschließen, sollte das Reaktionsgefäß mit einem Inertgas, vorzugsweise Stickstoff, gespült werden. Das Polyol-Polylsocyanat-Verhältnis wird so gewählt, dass der NCO-Gehalt des Prepolymeren 10 bis 21 Gew.-%, beträgt.

Zur Herstellung der Formkörper werden die organischen Polyisocyanate die A- und B-Komponenten in solchen Mengen zur Umsetzung gebracht, dass das Äquivalenzverhältnis von NCO-Gruppen der B-Komponente zur Summe der reaktiven Wasserstoffatome der A-Komponente 1:0,8 bis 1:1,25, vorzugsweise 1:0,9 bis 1:1,15 beträgt. Ein Verhältnis von 1:1 entspricht hierbei einen NCO-Index von 100.

Aufgrund des niedrigen NCO-Gehaltes der Polyisocyanatprepolymere ist dabei das Gewichtsverhältnis der Komponente (B) gegenüber der Komponente (A) üblicherweise größer als 1.

Die Formkörper werden im allgemeinen nach dem one-shot-Verfahren mit Hilfe der Niederdruck- oder Hochdrucktechnik in geschlossenen, zweckmäßigerweise temperierten Formwerkzeugen hergestellt. Die Formwerkzeuge bestehen gewöhnlich aus Metall, z.B. Aluminium oder Stahl. Diese Verfahrensweisen werden beispielsweise beschrieben von Piechota und Röhr in "Integralschaumstoff", Carl-Hanser-Verlag, München, Wien, 1975, oder im Kunststoff-Handbuch, Band 7, Polyurethane, 2. Auflage, 1983, Seiten 333ff.

Die Ausgangskomponenten werden üblicherweise bei einer Temperatur von 15 bis 90°C, vorzugsweise von 20 bis 35°C gemischt und gegebenenfalls unter erhöhtem Druck in das geschlossene Formwerkzeug eingebracht. Die Vermischung kann mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 90°C, vorzugsweise 30 bis 60°C.

Die Verdichtungsgrade zur Herstellung der Formkörper mit verdichteter Randzone und zelligem Kern liegen im allgemeinen im Bereich von 1,1 bis 8,5, vorzugsweise von 2 bis 7.

Die erfindungsgemäßen Polyurethane können beispielsweise für die Herstellung von Schuhsohlen und Lenkräder verwendet werden. Ebenfalls können die erfindungsgemäßen Polyurethane für die Herstellung von Materialien zur Schwingungsdämpfung, beispielsweise in Kfz-Fußmatten, verwendet werden.

Die vorliegende Erfindung soll durch nachstehende Beispiele veranschaulicht werden.

### Beispiele:

In den Beispielen wurde jeweils eine A-Komponente mit einer B-Komponente bei Raumtemperatur intensive gemischt und die Mischung in ein auf 50 °C temperiertes, plattenförmiges Formwerkzeug aus Metall eingebracht. Die mechanischen Eigenschaften der erhaltenen Platten wurden anschließend untersucht.

In den Abmischung werden folgende Komponenten verwendet:

**Tabelle 1**

| | |
|---|---|
| Polyol 1 | Polyether-Polyol, OHZ = 29, nominale Funktionalität |
| | f = 3, Verhältnis von PO/EO = 100/21, EO-cap |
| Polyol 2 | Polyether-Polyol, OHZ = 27, nominale Funktionalität |
| | f = 2, Verhältnis von PO/EO = 100/19, EO-cap |
| B14 | 1,4-Butandiol |
| EG | Ethylenglykol |
| DEG | Diethylenglykol |
| Z | Zellregulator, Dabco^{®} DC 193 |
| K1 | Amin-Katalysator, Dabco^{®} DC 1 |
| K2 | Zinn-Katalysator, Tinstab^{®} OTS 17-D |
| B500^{®} (Elastogran) | Polyisocyanatprepolymer mit NCO-Gehalt von 21%, auf Basis von 4,4'-MDI und Polyoxypropylen-glycol |
| B515^{®} (Elastogran) | Polyisocyanatprepolymer mit NCO-Gehalt von 13,7%, auf Basis von 4,4'-MDI und Polyoxypropylen-polyoxyethylen-glycol |

Beispiel 1:

Es wird ein erfindungsgemäßes System auf Basis von Ethylenglykol und Diethylenglykol (Beispiel 1) mit einem Vergleichssystem auf Basis von 1,4-Butandiol verglichen (Vergleichsbeispiel V1). Tabelle 2 zeigt die Zusammensetzung der A-Komponente, wobei sich die Zahlenwerte auf Gewichtsteile beziehen. Als B-Komponente wurde B500^{®} verwendet. Aus Tabelle 3 sind die mechanischen Eigenschaften der Prüfkörper zu entnehmen. Tabelle 4 vergleicht die mechanischen Eigenschaften vor und nach einem Hydrolysetest über einen breiten Verarbeitungsindex.

**Tabelle 2**

| | **V1** | **1** |
|---|---|---|
| Polyol 1 | 30 | 30 |
| Polyol 2 | 60 | 60 |
| EG | - | 5,7 |
| B14 | 7,5 | - |
| DEG | - | 1 |
| Wasser | 0,5 | 0,5 |
| Z | 0,2 | 0,2 |
| K1 | 2,8 | 2,8 |
| K2 | 0,2 | 0,2 |

**Tabelle 3**

| | **V1** | **1** |
|---|---|---|
| Mischungsverhältnis A : B = 100 : x | 64 | 65 |
| NCO-Iridex | 95 | 94 |
| Dichte (g/cm³) | 285 | 276 |
| Härte Shore A | 56 | 55 |
| Zugfestigkeit (N/mm²) | 4,6 | 3,3 |
| Dehnung (%) | 392 | 418 |
| Weiterreißfestigkeit (N/mm) | 7,0 | 6,4 |
| Rückprallelastizität (%) | 27 | 29 |
| Entformzeit (Minuten) | < 3,5 | < 3,5 |

**Tabelle 4**

| Index | 91 | 92 | 93 | 94 | 95 | 96 | 97 | 98 | 99 | 100 | 101 | 102 | 103 | 104 | 105 | 106 |
|---|---|---|---|---|---|---|---|---|---|---|---|---|---|---|---|---|
| V1a | - | - | x | - | - | - | - | - | - | - | - | - | - | - | - | - |
| V1b | - | - | - | - | - | - | - | - | - | - | - | - | - | x | - | - |
| 1a | x | x | x | x | x | x | **x** | **x** | **x** | **x** | - | - | - | - | - | - |
| 1b | - | - | - | - | - | - | **x** | **x** | **x** | **x** | x | x | x | x | x | x |

| | | | | | | | | | | | | | | | | |
|---|---|---|---|---|---|---|---|---|---|---|---|---|---|---|---|---|
| Tabelle 4 zeigt das Ergebnis einer Dauerbiege-Untersuchungen (Prüfstreifen, 100000 Biegungen bei RT, wobei - Risserweiterung > 2 mm, x Risserweiterung < 2 mm, a vor Hydrolysetest und b nach Hydrolysetest bedeutet. | | | | | | | | | | | | | | | | |

Eckdaten des Hydrolysetests: Aufbewahrung der Platten in geschlossenem Behälter bei 100 % Luftfeuchtigkeit, 70 °C für 1 Woche, Trocknen für 1 Tag bei 70 °C, Messung 24 h später.

Die Versuche zeigen, dass das EG/DEG-System (Beispiel **1**) gegenüber dem B14-System (Vergleichsbeispiel **V1**) ein signifikant verbreitertes Verarbeitungsfenster aufweist. Die Verarbeitungsfenster vor und nach Hydrolyse überlappen sich. Dies ist beim B14-System nicht der Fall. Das erfindungsgemäße System gemäß Beispiel **1** bietet somit eine erhöhte Prozesssicherheit.

### Beispiel 2:

Es wird ein erfindungsgemäßes System auf Basis von Ethylenglykol und Diethylenglykol **(2)** mit einem Vergleichsystem auf Basis von 1,4-Butandiol **(V2)** und einem Vergleichsystem auf Basis von lediglich Ethylenglykol (ohne Diethylenglykol) **(V3)** verglichen. Tabelle 5 zeigt die Zusammensetzung der A-Komponente, wobei sich die Zahlenwerte auf Gewichtsteile beziehen. Als B-Komponente wurde B515^{®} verwendet. Aus Tabelle 6 sind die mechanischen Eigenschaften der Prüfkörper zu entnehmen. Tabelle 7 vergleicht die mechanischen Eigenschaften über einen breiten Verarbeitungsindex.

**Tabelle 5**

| | **V2** | **V3** | **2** |
|---|---|---|---|
| Polyol 1 | 20 | 39 | 37 |
| Polyol 2 | 66 | 49 | 47 |
| EG | - | 7,4 | 7,4 |
| B14 | 8,0 | - | - |
| DEG | - | - | 3,8 |
| Wasser | 0,6 | 0,86 | 0,86 |
| Z | 0,2 | 0,2 | 0,2 |
| K1 | 4,50 | 3,40 | 3,40 |
| K2 | 0,05 | 0,03 | 0,03 |

**Tabelle 6**

| | **V2** | **V3** | **2** |
|---|---|---|---|
| Mischungsverhältnis A : B = 100 : x | 112 | 118 | 143 |
| NCO-Index | 97 | 93 | 97 |
| Dichte (g/cm³) | 238 | 258 | 236 |
| Härte Shore A | 45 | 51 | 52 |
| Zugfestigkeit (N/mm²) | 3,8 | 3,5 | 3,9 |
| Dehnung (%) | 434 | 484 | 443 |
| Weiterreißfestigkeit (N/mm) | 4,7 | 7,0 | 7,0 |
| Rückprallelastizität (%) | 45 | 47 | 39 |
| Entformzeit (Minuten) | < 3,5 | 6,0 | < 3,5 |
| Verarbeitbarkeit | + | - | + |

| | | | |
|---|---|---|---|
| In Tabelle 6 bedeutet: Verarbeitbarkeit: + = in Ordnung, - = Hautdefekte, Becherriss | | | |

**Tabelle 7**

| Index | 90 | 91 | 92 | 93 | 94 | 95 | 96 | 97 | 98 | 99 |
|---|---|---|---|---|---|---|---|---|---|---|
| V2 | - | - | x | x | x | - | - | - | - | - |
| V3 | **x** | **x** | **x** | **x** | **x** | **x** | **x** | **x** | **x** | - |
| 2 | - | - | - | **x** | **x** | **x** | **x** | **x** | **x** | **x** |

| | | | | | | | | | | |
|---|---|---|---|---|---|---|---|---|---|---|
| Tabelle 7 zeigt das Ergebnis einer Dauerbiege-Untersuchungen (Prüfstreifen, 100000 Biegungen bei RT, wobei - Risserweiterung > 2mm und x Risserweiterung < 2 mm bedeutet. | | | | | | | | | | |

Die Versuche zeigen, dass das Verarbeitungsfenster sich verbreitert, wenn B14 durch EG als Kettenverlängerer ersetzt wird. Reine EG-Systeme sind jedoch aufgund langer Entformzeiten und auftretender Hautdefekte an den Prüfkörpern nicht verarbeitbar (Vergleichsbeispiel **V3**). Dies lässt sich auch durch Katalyse nicht verbessern. EG/DEG-Systeme sind dagegen gut verarbeitbar bei gleichzeitig weitem Verarbeitungsfenster (Beispiel **2**). Das Beispiel zeigt, dass die Verbreiterung des Verarbeitungsfenster für Prepolymere mit hohem **(1)** und niedrigem **(2)** NCO-Gehalt zutrifft.

Die Versuche zeigen, dass die Aufgabe der vorliegenden Erfindung durch ein Polyurethansystem gelöst werden konnte, das eine Kombination von EG und DEG als Kettenverlängerer enthält.

Im Gegensatz zum bislang im Stand der Technik fast ausschließlich als Kettenverlängerer verwendeten 1,4-Butandiol werden mit Ethylenglykol und Diethylenglykol Schäume mit deutlich verbreitertem Verarbeitungsfenster erhalten. Die in der Erfindung beschriebenen Zusammensetzungen liefern Schäume, die sowohl vor als auch nach Hydrolyse gute Dauerbiege-Ergebnisse aufweisen, wobei sich die Verarbeitungsfenster vor und nach Hydrolyse über einen weiten Indexbereich überlappen.

Systeme mit EG als alleinigem Kettenverlängerer erwiesen sich aufgrund der langen Entformzeiten und Hautdefekten als nicht verarbeitbar (vgl. **V3** und **2**). Die erfindungsgemäße Kombination von EG und DEG als Kettenverlängerer ermöglicht hingegen ein weites Verarbeitungsfenster bei gleichzeitig guter Verarbeitbarkeit.

## Patentansprüche

1. Verfahren zur Herstellung von Polyurethanen durch Umsetzung einer Isocyanatkomponente (B) mit einer Polyolkomponente (A), **dadurch gekennzeichnet, dass** es sich bei der Isocyanatkomponente (B) um Polyisocyanatprepolymer mit einem NCO-Gehalt von 10 bis 21 % handelt, und, dass der Umsetzung als Kettenverlängerungsmittel Ethylenglykol (C1) und Diethylenglykol (C2) zugegeben werden, wobei das Gewichtsverhältnis von Ethylenglykol (C1) zu Diethylenglykol (C2) 1 : 0,01 bis 1 : 10 beträgt.

2. Verfahren nach Anspruch 1, **dadurch gekennzeichnet, dass** die Kettenverlängerungsmittel Ethylenglykol (C1) und Diethylenglykol (C2) der Polyolkomponente (A) zugegeben werden.

3. Verfahren nach Anspruch 1, **dadurch gekennzeichnet, dass** Ethylenglykol der Polyolkomponente (A) und Diethylenglykol der Isocyanatkomponente (B) zugesetzt wird.

4. Verfahren nach einem der Ansprüche 1 bis 3, **dadurch gekennzeichnet, dass** es sich bei der Polyolkomponente (A) um eine Komponente auf Basis eines Polyetherpolyols handelt.

5. Verfahren nach einem der Ansprüche 1 bis 4, **dadurch gekennzeichnet, dass** es sich bei den Polyurethanen um Polyurethanformkörper mit zelligem Kern und kompakter Oberfläche handelt, die in einem Formwerkzeug hergestellt werden.

6. Polyurethane, erhältlich nach einem der Ansprüche 1 bis 5.

7. Verwendung der Polyurethane nach Anspruch 6 zur Herstellung von Schuhsohlen, Lenkrädern und Materialien zur Schwingungsdämpfung.

8. Verwendung eines Gemisches von Ethylenglykol (C1) und Diethylenglykol (C2), wobei das Gewichtsverhältnis von Ethylenglykol (C1) zu Diethylenglykol (C2) 1 : 0,01 bis 1 : 10 beträgt, als Kettenverlängerungsmittel bei der Herstellung von Polyurethanen durch Umsetzung eines Polyisocyanatprepolymers mit einem NCO-Gehalt von 10 bis 21 % mit einer Polyolkompontente (A).

## Claims

1. A process for the preparation of polyurethanes by reacting an isocyanate component (B) with a polyol component (A), wherein the isocyanate component (B) is a polyisocyanate prepolymer having an NCO content of from 10 to 21%, and wherein ethylene glycol (C1) and diethylene glycol (C2) are added to the reaction as chain extenders, the weight ratio of ethylene glycol (C1) to diethylene glycol (C2) being from 1 : 0.01 to 1 : 10.

2. The process according to claim 1, wherein the chain extenders ethylene glycol (C1) and diethylene glycol (C2) are added to the polyol component (A).

3. The process according to claim 1, wherein ethylene glycol is added to the polyol component (A) and diethylene glycol to the isocyanate component (B).

4. The process according to any of claims 1 to 3, wherein the polyol component (A) is a component based on a polyetherpolyol.

5. The process according to any of claims 1 to 4, wherein the polyurethanes are polyurethane moldings having a cellular core and compact surface, which are prepared in a mold.

6. A polyurethane obtainable according to any of claims 1 to 5.

7. The use of a polyurethane according to claim 6 for the production of shoe soles, steering wheels and materials for vibration damping.

8. The use of a mixture of ethylene glycol (C1) and diethylene glycol (C2), the weight ratio of ethylene glycol (C1) to diethylene glycol (C2) being from 1 : 0.01 to 1 : 10, as a chain extender in the preparation of polyurethanes by reacting a polyisocyanate prepolymer having an NCO content of from 10 to 21% with a polyol component (A).

## Revendications

1. Procédé pour la production de polyuréthannes par mise en réaction d'un composant isocyanate (B) avec un composant polyol (A), **caractérisé en ce que** le composant isocyanate (B) consiste en prépolymère polyisocyanate ayant une teneur en NCO de 10 à 21 %, et **en ce qu'**on ajoute au mélange réactionnel de l'éthylèneglycol (C1) et du diéthylèneglycol (C2) en tant que prolongateurs de chaîne, le rapport pondéral de l'éthylèneglycol (C1) au diéthylèneglycol (C2) valant de 1:0,01 à 1:10.

2. Procédé selon la revendication 1, **caractérisé en ce que** les prolongateurs de chaîne éthylèneglycol (C1) et diéthylèneglycol (C2) sont ajoutés au composant polyol (A).

3. Procédé selon la revendication 1, **caractérisé en ce que** l'éthylèneglycol est ajouté au composant polyol (A) et le diéthylèneglycol est ajouté au composant isocyanate (B).

4. Procédé selon l'une quelconque des revendications 1 à 3, **caractérisé en ce que** le composant polyol (A) consiste en un composant à base d'un polyétherpolyol.

5. Procédé selon l'une quelconque des revendications 1 à 4, **caractérisé en ce que** les polyuréthannes consistent en des corps moulés en polyuréthanne à noyau cellulaire et surface compacte, qui sont produits dans un outil de moulage.

6. Polyuréthannes, pouvant être obtenus selon l'une quelconque des revendications 1 à 5.

7. Utilisation des polyuréthannes selon la revendication 6, pour la fabrication de semelles de chaussures, de volants de direction et de matériaux pour l'amortissement de vibrations.

8. Utilisation d'un mélange d'éthylèneglycol (C1) et de diéthylèneglycol (C2), le rapport pondéral de l'éthylèneglycol (C1) au diéthylèneglycol (C2) valant de 1:0,01 à 1:10, en tant que prolongateurs de chaîne dans la production de polyuréthannes par mise en réaction d'un prépolymère polyisocyanate, ayant une teneur en NCO de 10 à 21 %, avec un composant polyol (A).
